# EUROPÄISCHE PATENTSCHRIFT

(11) **EP 2 102 880 B1**
(45) Veröffentlichungstag und Bekanntmachung des Hinweises auf die Patenterteilung: **08.02.2012**
(21) Anmeldenummer: 07856337.6
(22) Anmeldetag: 03.12.2007
(51) Int. Cl.: H01H 19/10, H01H 19/56

(54) **ELEKTRISCHER SCHALTER MIT VERDREHBAR GELAGERTEM KONTAKTELEMENT**
ELECTRICAL SWITCH WITH A CONTACT ELEMENT MOUNTED SUCH THAT IT CAN ROTATE
COMMUTATEUR ÉLECTRIQUE À ÉLÉMENT DE CONTACT MONTÉ DE MANIÈRE ROTATIVE

(30) Priorität: 14.12.2006 DE 102006059466
(43) Veröffentlichungstag der Anmeldung: 23.09.2009
(73) Patentinhaber: IDS-Technology GmbH, 54634 Bitburg (DE)
(72) Erfinder: Krütten, Viktor, 65510 Hünstetten (DE)
(74) Vertreter: Lenzing Gerber Stute
(86) Internationale Anmeldenummer: PCT/EP2007/010477
(87) Internationale Veröffentlichungsnummer: WO 2008/071320

(56) Entgegenhaltungen:
- EP-A- 0 646 938
- WO-A-02/065494
- DE-A1- 2 600 368

## Beschreibung

Die Erfindung betrifft einen elektrischen Schalter nach dem Oberbegriff des Anspruchs 1.

Die überwiegende Zahl der im Einsatz befindlichen Kontaktierungstechniken arbeiten mit einer Stecktechnik, d. h. der Kontakt zur Stromschiene wird mit einem Stecker hergestellt, der auf die Stromschiene geschoben wird und die Schiene beidseitig umschließt. Diese Stecktechnik benötigt ein konstruktiv großes Volumen zum Kontaktieren und ist relativ offen und schwer abzuschotten. Entstehende Störlichtbögen breiten sich relativ leicht in die Nachbarregionen aus und zerstören so ganze Schaltfelder oder Steuereinheiten.

Aus der EP 0 646 938 A1 ist ein Schalter bekannt, bei dem ein Kontaktelement an seinen beiden Enden jeweils eine Kontaktfläche zur Kontaktierung mit fest angeordneten Anschlussleitern aufweist. Das Kontaktelement ist um eine Achse verschwenkbar gelagert, wobei die Kontaktflächen beim Verschwenken des Kontaktelements auf die Kontaktflächen der Anschlussleiter aufgesetzt oder von diesen abgehoben werden. Sofern Verschweißungen der Kontaktflächen auftreten, sind sehr große Kräfte zum Aufbrechen der Verschweißungen erforderlich.

Aus der WO 02/065494 A1 ist ebenfalls ein verschwenkbar gelagertes Kontaktelement bekannt, welches von seiner Funktion und Bewegung ungefähr dem Kontaktelement EP 0 646 938 A1 entspricht.

Neben der Stecktechnik ist aus der EP 1 318 584 ein Einschub für eine Schaltanlage bekannt, bei der die Kontaktelemente der elektrischen Schalter federnd ausgebildet sind und gegen die Stromschienen gedrückt werden.

Nachteilig bei den vorbeschriebenen Kontaktierungstechniken ist, dass die Kräfte der Antriebsmechanismen für das Verstellten der Kontaktelemente nicht ausreichen, um eventuelle ausgetreten Verschweißungen aufzubrechen. Die Kontakte müssen, je nach Schwere der Verschweißung, in der Regel manuell mit Handwerkzeugen aufgebrochen werden. Je nach Schaltfeldtyp hat dies eine Zerstörung der Stromführungseinheit zur Folge und kann nur spannungslos durchgerührt werden.

Bei der vorbeschriebenen Stecktechnik ist nur mit einem relativ großen Aufwand eine gute Kontaktierungssicherheit zu realisieren. Treten konstruktive Toleranzen oder bauliche Fehlmaße auf, verzieht sich beim Schließen des Schalters das Schaltgerüst. Dies hat zur Folge, dass das Kontaktelement zur Stromschiene nicht mehr optimal in Position ist und hierdurch der Kontakt nicht vollständig zur Stromschiene erfolgt, was wiederum zu Fehlkontaktierungen bis hin zu Störlichtbogenzündungen führt.

Es ist daher Aufgabe der vorliegenden Erfindung, einen elektrischen Schalter zur Ankopplung eines elektrischen Leiters an eine Stromschiene bereitzustellen, bei dem das Kontaktelement auch bei leichten Verschweißungen das Kontaktelements mit der Stromschiene noch sicher von der Stromschiene abgehoben werden kann.

Diese Aufgabe wird erfindungsgemäß mit einem Schalter mit den Merkmalen des Anspruchs 1 gelöst.

Der erfindungsgemäße elektrische Schalter arbeitet nicht mit einer Stecktechnik, sondern mit einer Kontakttechnik. Die Stromschiene wird nicht mehr umhüllt, sondern nur noch einseitig kontaktiert. Daraus resultiert ein minimales Kontaktierungsvolumen und eine einfache wirkungsvolle Abschottung gegenüber den anderen Funktionsräumen.

Bei geschlossenem elektrischem Schalter wird das Kontaktelement vorteilhaft federbelastet gegen die Stromschiene gedrückt, so dass eventuelle Fertigungstoleranzen oder eine durch Abbrannt entstandene Verkürzung des Kontaktelements ausgeglichen wird. Das Federelement ist vorteilhaft derart ausgestaltet, dass aufgrund der Lorentzkraft der Kontaktdruck dynamisch durch das magnetische Feld verstärkt wird, welches auf das leitende Federelement im inneren Kontaktbereich wirkt und das Kontaktelement im Kurzschlußfall fest an die Stromschiene presst. Eine Kontaktabhebung wird somit vorteilhaft verhindert.

Wie bereits beschrieben, kann das Kontaktelement zumindest in der Anfangsbewegung beim Abheben von der Stromschiene um die Kontaktfläche herum verdreht und gleichzeitig oder anschließend von der Stromschiene wegbewegt werden. Sofern eine Kontaktverschweißung aufgetreten ist, wird diese vorteilhaft aufgrund des hohen Drehmomentes bei der Drehbewegung mit der vorhandenen Drehmechanik sicher und ohne Hilfsmittel gelöst. Die Drehbewegung ist dabei entkoppelt. Eine Bewegung der Anschlussleitung des Kontaktelementes findet nicht statt. Die Verdrehung muss nicht zwangsläufig erfolgen. So erfolgt sie bei einer vorteilhaften Ausführungsform nur dann, wenn die Kontakte verklebt sind.

Es können mehrere erfindungsgemäße elektrische Schalter in einer Strommoduleinheit angeordnet werden. Die Schalter werden dabei insbesondere nebeneinander derart angeordnet, dass sie 2. B, von einem einzigen Betätigungselement, insbesondere über eine gemeinsame Welle gleichzeitig verstellt werden können. Es ist selbstverständlich ebenso möglich, dass die einzelnen Schalter oder Gruppen von Schaltern über separate Antriebe angetrieben sind.

Der erfindungsgemäße elektrische Schalter kann vorteilhaft aufgrund seiner geringen Abmessungen und wenigen Teile in jedes Gehäuse bzw. Schaltfeld eingebaut werden, ohne dass diese ihre hohen Sicherheitsanforderungen verlieren. Der elektrische Schalter kann als Einzelteil ausgewechselt werden, so dass eine schnelle und kostengünstige Reparatur bereits montierter Gehäuse bzw. Schaltfelder möglich ist. Der erfindungsgemäße elektrische Schalter ist im Kraftwerksbereich, der Medizintechnik, der Grundstoffindustrie, der chemischen Industrie oder auch allgemein im Nieder- und Mittelspannungsbereich einsetzbar.Es ist selbstverständlich möglich, dass das Kontaktelement nicht nur von einer Zahnstange angetrieben werden muss. Ebenso ist es möglich, dass das Kontaktelement direkt mit dem Ritzel eines Antriebs zusammenwirkt, wobei dann das Ritzel in axialer Richtung auf der Verzahnung des Kontaktelementes entlang gleiten kann. Auch ist es möglich, dass das Kontaktelement z. B. über Zahnriemen oder mittels sonstiger Antriebe in Drehbewegung versetzt werden kann, um das Schaltelement zu öffnen bzw. zu schließen.

Der erfindungsgemäße elektrische Schalter kann vorzugsweise formschlüssig an dem Stromschienenhalter oder an dieser selbst befestigt werden, wobei der Formschluss insbesondere in Richtung der Hubbewegung des Kontaktelementes wirkt.

Erfindungsgemäß ist das Kontaktelement an einer drehbaren Welle angeordnet, wobei das Kontaktelement selbst verschieblich in oder an der Welle gelagert ist. So ist es möglich an der Welle mehrere Kontaktelemente mehrerer nebeneinander angeordneter Schalter zu lagern. Damit das Kontaktelement beim Abheben um die Flächennormale der Stromschienenkontaktfläche verdreht wird, weist die Welle oder ein daran befestigtes Lagerteil ein Führungskulisse oder Anlageflächen auf, die ein Verdrehen bzw. Kippen des Kontaktelementes beim Verdrehen der Welle bewirken, wodurch das evtl. verklebte Kontaktelement um die Flächennormale verkippt bzw. verdreht und die Verklebung hierdurch sicher gelöst wird. Danach kann das Kontaktelement sicher in die geöffnete Schalterstellung verschwenkt werden.

Nachfolgend werden verschiedene Ausführungsformen des erfindungsgemäßen elektrischen Schalters anhand von Zeichnungen näher erläutert.

Es zeigen:
- Figuren 1a bis 1c:: perspektivische Ansichten einer ersten möglichen Ausführungsform mit um eine senkrecht zur Flächennormalen der Stromschienenkontaktfläche stehenden Achse herum verdrehbaren Kontaktelement, das zwischen einem Leiterabschnitt und der Stromschiene angeordnet ist;
- Figuren 2a und 2b:: Seitenansicht des Schalters nach den Figuren la bis 1c;
- Figur 3:: perspektivische Ansicht von mehreren von einer gemeinsamen Welle verschwenkbaren elektrischen Schaltern gemäß der ersten Ausführungsform;
- Fig. 4 a) bis d):: verschiedene Ansichten eines Kontaktelementes, das in einem als Lager ausgebildeten Bereich der Betätigungswelle verschieblich und verkippbar gelagert ist.

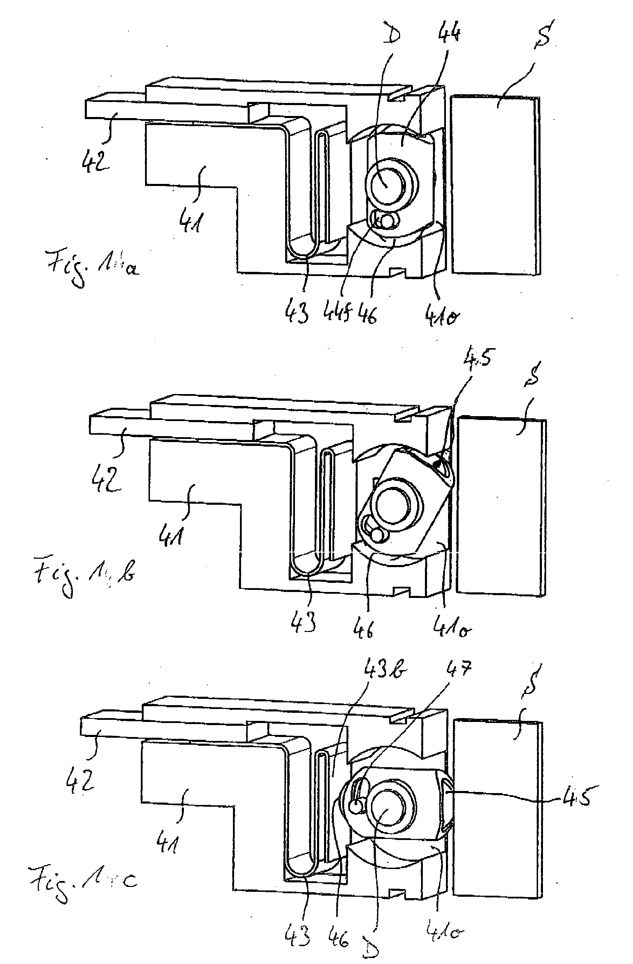

Die Figuren 1a bis 1c zeigen eine erste mögliche Ausführungsform eines erfindungsgemäßen elektrischen Schalters, bei dem das Kontaktelement 44 um eine senkrecht zur Flächennormalen S_{N} der Stromschienenkontaktfläche S_{K} angeordneten Welle D herum verschwenkbar ist. In dem Gehäuse 41 ist ein Leiter 43 angeordnet, dessen freies Ende als Feder 43b ausgebildet ist. Die Figur la zeigt den Schalter in der geöffneten Stellung. Die Kontakte 45 und 46 des Kontaktelementes 44 liegen dabei innerhalb des Gehäuses 41. In Figur 1b ist der Schließvorgang dargestellt, bei dem das Kontaktelement um seine Achse D herum verschwenkt wird. Die Abstände zwischen dem Kontaktelement 44 und der Stromschiene S bzw. zwischen Kontaktelement 44 und Leiter 43b sind derart ausgebildet, dass zuerst die Kontaktfläche 45 mit der Stromschiene S in Berührung kommt. Zudem ist der Abstand des Leiters 43b und der Stromschiene bei geöffnetem Schalter kleiner als die Längserstreckung des Kontaktelements 44. Beim Schließen des Schalters kommt das Kontaktelement zuerst mit der Stromschiene in Kontakt. Das Kontaktelement 44 ist radial verschieblich zu seiner Längserstreckung auf der Welle D gelagert, und wird von der Stromschiene S in Richtung Leiter 43b gedrückt, wobei das Kontaktelement weiter bis zu seiner endgültigen Stellung gem. Figur 1c verschwenkt wird.

Optional kann der Stift 47 vorgesehen werden, welcher das Kontaktelement 44 beim Öffnen zuerst um seiner Längserstreckungsachse verdreht, so dass auch ein festgeklebter bzw. -geschweißter Kontakt durch Abdrehen sicher gelöst wird. Hierzu sind entsprechende Führungskulissen am Stift und der fensterartigen Öffnung 44f im Kontaktelement 44 vorzusehen. Während des Verdrehens um die Längserstreckungsachse wird das Kontaktelement noch nicht um die Achse der Welle D verdreht. Dies erfolgt erst, nach dem der Stift 47 das Kontaktelement 44 um bis zu 25° verdreht hat.

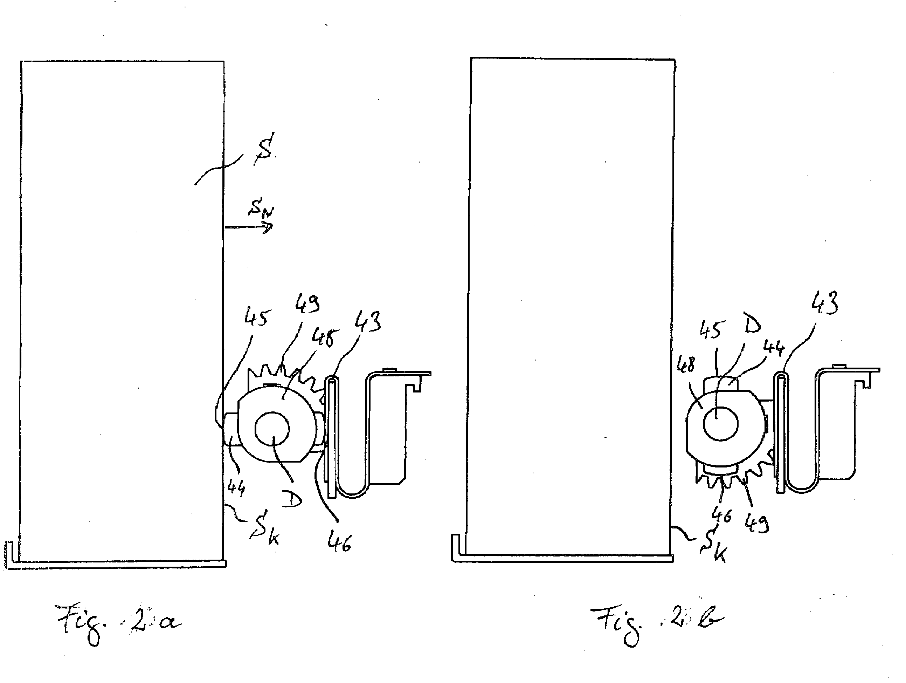

Die Figuren 2a, 2b, 3 und 4 zeigen eine leichte Abwandlung der fünften Ausführungsform. Der Verdrehmechanismus zum Abdrehen des Kontaktelements 44 um seine Längserstreckungsachse wird innerhalb des Führungskörper 48 durch Anlageflächen (51, 51') gebildet. Der Führungskörper 48 kann Bestandteil einer Welle D oder mit dieser einstückig ausgebildet sein. Die Welle D und/oder die Führungskörper 48 müssen aus einem isolierenden Material gefertigt sein. Der Führungskörper 48 weist eine durchgehende Aussparung 50, 50' auf, welche in die Bereiche 48a und 48 b aufgeteilt ist. Die Aussparung 50, 50' weist die schrägen Anlageflächen 51, 51' sowie die parallel zur Wellenachse ausgebildeten Anlageflächen 52, 53 auf. Die Anlageflächen 52, 53 druckbeaufschlagen das Kontaktelement 44 beim Verdrehen der Welle D von der geöffneten Schalterstellung in die geschlossene Schalterstellung. Ein sicheres Anliegen des Kontaktelements 44 an diesen Anlageflächen 52, 53 ist durch die von den Kontaktflächen 45, 46 zusammen mit der Stromschiene S bzw. Leiter 43 erzeugten Reibkräfte gewährleistet.

Beim Öffnen des Schalters wird das Kontaktelement 44 bedingt durch die vorstehend beschriebenen Reibungskräfte und evtl. bestehende Verschweißung zwischen Kontaktelement 44 und Stromschiene S zunächst in seiner Stellung verharren. Durch die schräg zur Wellenachse ausgebildeten Anlageflächen 51, 51' wird das Kontaktelement zunächst mit seiner rechten Seite (s. Fig. 16, u. 17b) an den Anlageflächen 51, 51' anschlagen und um seine Längsachse zwangsgekippt, wodurch eine eventuelle Verklebung bzw, Verschweißung sicher ohne großen Kraftauswand durch Abdrehen gelöst wird. Nach dem Lösen der Verschweißung oder spätestens beim Vollständigen Anschlagen des Kontaktelements mit seinen Seitenwandungen an die Anlageflächen 51, 51', was nach einer Kippbewegung von ca. 15° erfolgt, wird das Kontaktelement 44 zusammen mit der Welle um die Wellenachse in Richtung geöffnete Schalterstellung (Fig. 15b) verschwenkt. Sofern keine Verschweißung vorhanden ist, kann auch bedingt durch die jeweils vorhandenen Reibkräfte das Kontaktelement 44 auch vor dem vollständigen Anschlagen an die Kontaktflächen 51, 51' von der Welle D um deren Achse mit verschwenkt werden.

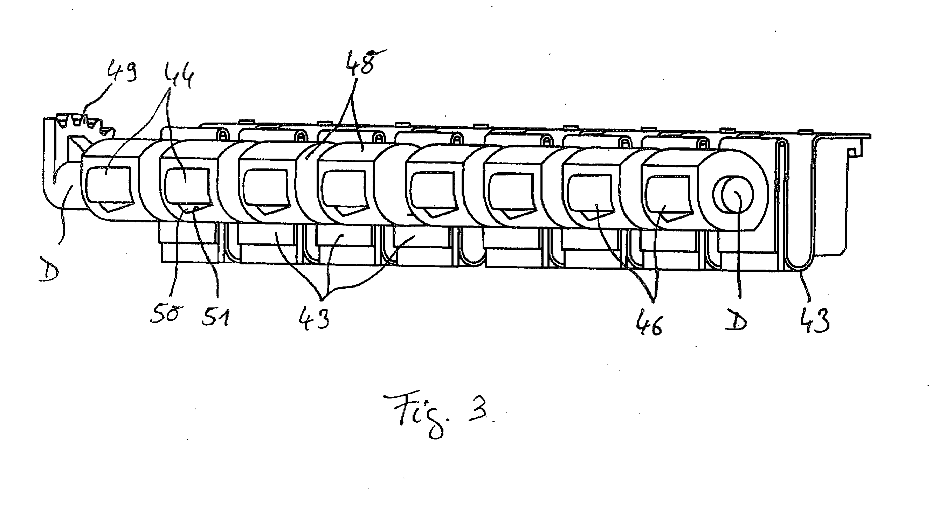

Die Figur 3 zeigt eine parallele Anordnung von acht Schaltern, deren Kontaktelemente 44 von einer gemeinsamen Welle D angetrieben werden. An der Welle D ist ein Zahnrad 49 angeformt oder befestigt, welches mit einem nicht dargestellten mechanischen oder elektromechanischen Antrieb zusammenwirkt. Diese Ausführungsvariante erreicht eine kompaktere Bauweise in der Bauhöhe und in der Baubreite, als die vorherigen Ausführungsvarianten.

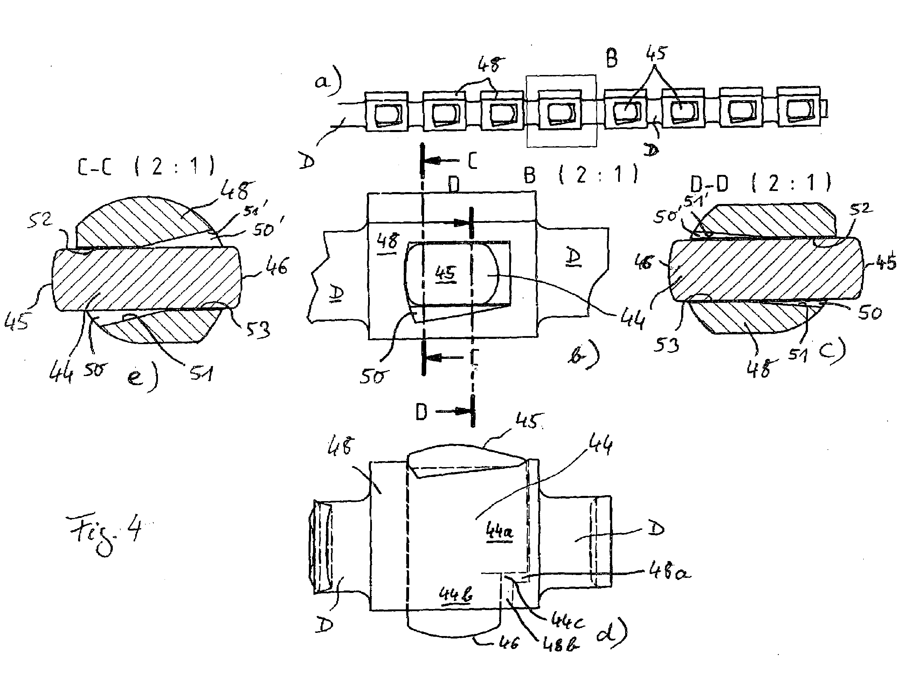

Die Figuren 4 a) bis d) zeigen verschiedene Ansichten der zuletzt beschriebenen Ausführungsform. Wie in Figur 4d) dargestellt, weist das Kontaktelement 44 einen breiten Bereich 44a und einen schmalen Bereich 44b auf. Der Bereich 44a bildet mit seiner außerhalb des Lagerteils 48 befindlichen freien Stirnseite die Kontaktfläche 45, welche mit der nicht dargestellten Stromschiene S zusammenwirkt. Der Bereich 44b bildet mit seiner Stirnseite die Kontaktfläche 46, welche mit dem Leiter 43 in der geschlossenen Schalterstellung zusammenwirkt. Die Bereiche 48a und 48b der Aussparung 50, 50' des Führungskörpers 48 sind so ausgebildet, dass das Kontaktelement 44 durch einen Formschluss daran gehindert ist nach unten (Fig, 4d) aus dem Führungskörper 48 herauszufallen. Durch diese Ausgestaltung ist gewährleistet, dass das Kontaktelement 44 in Richtung der Verbindungslinie zwischen den Kontaktflächen 45, 46 verschieblich im Führungskörper 48 gelagert ist, so dass es bedingt durch die Anpresskräfte von Stromschiene S und Leiter 43 positioniert werden kann.

## Patentansprüche

1. Elektrischer Schalter zur elektrischen Ankopplung eines elektrischen Leiters an eine Stromschiene, wobei der elektrische Schalter ein Kontaktelement und eine Verstelleinrichtung aufweist, wobei die Verstelleinrichtung beim Schließen und Öffnen des Schalters das Kontaktelement verstellt, wobei die Verstelleinrichtung das Kontaktelement (44) zum Öffnen und Schließen des Schalters um eine Achse verdreht, und dass das Kontaktelement (44) auf einer Welle (D) gelagert ist, wobei ein Antrieb zum Öffnen und Schließen des Schalters die Welle (D) in Rotation versetzt, wobei das Kontaktelement zwei Kontaktflächen (45, 46) aufweist, von denen in der geschlossenen Schalterstellung die eine Kontaktfläche (45) mit der Stromschiene (S) und die andere Kontaktfläche (46) mit einem am Gehäuse (41) angeordneten Leiter (43) in Kontakt ist, **dadurch gekennzeichnet, dass** das Kontaktelement (44) in einer radialen Richtung auf der Welle (D) verschieblich gelagert ist.

2. Elektrischer Schalter nach Anspruch 1, **dadurch gekennzeichnet, dass** die Welle (D) senkrecht zur Flächennormalen (S_{N}) der Kontaktfläche (Sₖ) der Stromschiene (S) angeordnet ist.

3. Elektrischer Schalter nach Anspruch 1 oder 2, **dadurch gekennzeichnet, dass** ein Antrieb die Welle (D) zum Öffnen und Schließen des Schalters verdreht bzw. verschwenkt.

4. Elektrischer Schalter nach einem der Ansprüche 1 bis 3, **dadurch gekennzeichnet, dass** das Kontaktelement (44) in einem Lagerteil oder Führungsteil (48) um seine Längsachse verkippbar und in Richtung seiner Längsachse verschieblich gelagert ist.

5. Elektrischer Schalter nach Anspruch 4, **dadurch gekennzeichnet, dass** die Welle (D) und/oder das Führungsteil (48) aus einem nichtleitenden Material gefertigt sind.

6. Elektrischer Schalter nach einem der Ansprüche 1 bis 5, **dadurch gekennzeichnet, dass** das Führungsteil (48) Anlageflächen (51, 51') aufweist, die schräg zur Wellenachse der Welle (D) ausgebildet sind, wobei durch die Anlageflächen (51, 51') das Kontaktelements (44) beim Öffnen des Schalters zunächst um seine Längsachse, welche durch die Verbindungslinie seiner Kontaktflächen (45, 46) definiert ist, verschwenkt.

7. Elektrischer Schalter nach einem der Ansprüche 1 bis 6, **dadurch gekennzeichnet, dass** mehrere Führungsteil (48) für nebeneinander angeordnete Schalter an einer gemeinsamen Welle (D) angeordnet sind.

8. Schaltanlage unter Verwendung mehrerer nebeneinander angeordneter elektrischer Schalter nach einem der vorhergehenden Ansprüche, **dadurch gekennzeichnet, dass** mittels eines Betätigungselementes ein Kontaktelement, alle Kontaktelemente oder jeweils eine Gruppe von Kontaktelementen gleichzeitig verdrehbar ist bzw. sind.

9. Schaltanlage nach Anspruch 8, **dadurch gekennzeichnet, dass** das Betätigungselement von einem Antrieb oder manuell zum Verdrehen des bzw, der Kontaktelemente verstellbar ist.

10. Schaltanlage nach Anspruch 9, **dadurch gekennzeichnet, dass** das Betätigungselement eine Welle (D) oder eine Zahnstange ist.

## Claims

1. Electrical switch for electrical connection of an electrical conductor to a conductor rail, the electrical switch having a contact element and an adjusting device, the adjusting device adjusting the contact element when the switch is closed and opened, the adjusting device rotating the contact element (44) around an axis to open and close the switch, and the contact element (44) being carried on a shaft (D), a drive to open and close the switch putting the shaft (D) into rotation, the contact element having two contact surfaces (45, 46), of which in the closed switch position one contact surface (45) is in contact with the conductor rail (S) and the other contact surface (46) is in contact with a conductor (43) which is arranged on the housing (41), **characterized in that** the contact element (44) is carried so that it is movable in a radial direction on the shaft (D).

2. Electrical switch according to Claim 1, **characterized in that** the shaft (D) is arranged perpendicularly to the surface normal (S_{N}) of the contact surface (Sₖ) of the conductor rail (S).

3. Electrical switch according to Claim 1 or 2, **characterized in that** a drive rotates and/or swivels the shaft (D) to open and close the switch.

4. Electrical switch according to any one of Claims 1 to 3, **characterized in that** the contact element (44) is carried in a bearing part or guiding part (48) so that it can be tilted around its longitudinal axis, and moved in the direction of its longitudinal axis.

5. Electrical switch according to Claim 4, **characterized in that** the shaft (D) and/or the guiding part (48) is made of a non-conducting material.

6. Electrical switch according to any one of Claims 1 to 5, **characterized in that** the guiding part (48) has locating faces (51, 51'), which are formed obliquely to the shaft axis of the shaft (D), the contact element (44), when the switch is opened, first being swivelled by the locating faces (51, 51') around its longitudinal axis, which is defined by the connecting line of its contact surfaces (45, 46).

7. Electrical switch according to any one of Claims 1 to 6, **characterized in that** multiple guiding parts (48) for switches arranged next to each other are arranged on a common shaft (D).

8. Switchgear using multiple electrical switches arranged next to each other according to any one of the preceding claims, **characterized in that** a contact element, all contact elements or a group of contact elements can be rotated simultaneously by means of an actuating element.

9. Switchgear according to Claim 8, **characterized in that** the actuating element can be adjusted by a drive or manually to rotate the contact element(s).

10. Switchgear according to Claim 9, **characterized in that** the actuating element is a shaft (D) or a toothed rack.

## Revendications

1. Commutateur ou interrupteur électrique pour le couplage électrique d'un conducteur électrique à une barre de distribution de courant ou barre omnibus, le commutateur électrique comprenant un élément de contact et un dispositif de déplacement, le dispositif de déplacement déplaçant l'élément de contact lors de la fermeture et de l'ouverture du commutateur, le dispositif de déplacement faisant tourner l'élément de contact (44) autour d'un axe pour l'ouverture et la fermeture du commutateur et l'élément de contact (44) étant monté sur un arbre (D), un moyen d'entraînement produisant une rotation de l'arbre (D) pour l'ouverture et la fermeture de l'interrupteur, et l'élément de contact présentant deux surfaces de contact (45, 46) dont une surface de contact (45) est en contact avec la barre omnibus (S) et l'autre surface de contact (46) avec un conducteur (43) agencé sur le boitier (41), lorsque le commutateur est dans la position fermée, **caractérisé en ce que** l'élément de contact (44) est monté sur l'arbre (D) de manière à pouvoir coulisser dans une direction radiale.

2. Commutateur électrique selon la revendication 1, **caractérisé en ce que** l'arbre (D) est agencé de manière perpendiculaire à la normale de surface (S_{N}) de la surface de contact (Sₖ) de la barre omnibus (S).

3. Commutateur électrique selon la revendication 1 ou la revendication 2, **caractérisé en ce qu'**un moyen d'entraînement fait tourner ou pivoter l'arbre (D) pour l'ouverture et la fermeture du commutateur.

4. Commutateur électrique selon l'une des revendications 1 à 3, **caractérisé en ce que** l'élément de contact (44) est monté dans une pièce de palier ou pièce de guidage (48) de manière à pouvoir basculer autour de son axe longitudinal et de manière à pouvoir coulisser dans la direction de son axe longitudinal.

5. Commutateur électrique selon la revendication 4, **caractérisé en ce que** l'arbre (D) et/ou la pièce de guidage (48) sont fabriqués en un matériau non conducteur.

6. Commutateur électrique selon l'une des revendications 1 à 5, **caractérisé en ce que** la pièce de guidage (48) présente des surfaces d'appui (51, 51'), qui sont d'une configuration oblique par rapport à l'axe de l'arbre (D), les surfaces d'appui (51, 51') produisant tout d'abord, lors de l'ouverture du commutateur, un pivotement de l'élément de contact (44) autour de son axe longitudinal, qui est défini par la ligne de liaison de ses surfaces de contact (45, 46).

7. Commutateur électrique selon l'une des revendications 1 à 6, **caractérisé en ce que** plusieurs pièces de guidage (48) pour des commutateurs placés côte à côte, sont agencés sur un arbre (D) commun.

8. Installation de commutation utilisant plusieurs commutateurs électriques agencés côte à côte selon l'une des revendications précédentes, **caractérisée en ce qu'**au moyen d'un élément d'actionnement il est possible de faire tourner un élément de contact, ou simultanément tous les éléments de contact ou respectivement un groupe d'éléments de contact.

9. Installation de commutation selon la revendication 8, **caractérisée en ce que** l'élément d'actionnement peut être déplacé par un moyen d'entraînement ou manuellement, pour faire tourner l'élément ou les éléments de contact.

10. Installation de commutation selon la revendication 9, **caractérisée en ce que** l'élément d'actionnement est un arbre (D) ou une crémaillère.
